# EUROPÄISCHE PATENTSCHRIFT

(11) **EP 2 948 690 B1**
(45) Veröffentlichungstag und Bekanntmachung des Hinweises auf die Patenterteilung: **11.11.2020**
(21) Anmeldenummer: 14701727.1
(22) Anmeldetag: 24.01.2014
(51) Int. Cl.: F16D 55/2255, F16D 65/56, F16D 66/02

(54) **SCHEIBENBREMSE MIT EINER LÜFTSPIELÜBERWACHUNGSVORRICHTUNG, UND VERFAHREN ZUR LÜFTSPIELÜBERWACHUNG**
DISK BRAKE HAVING A CLEARANCE-MONITORING DEVICE, AND METHOD FOR MONITORING CLEARANCE
FREIN À DISQUE AVEC DISPOSITIF DE SURVEILLANCE DE JEU ET PROCÉDÉ DE SURVEILLANCE DE JEU

(30) Priorität: 25.01.2013 DE 102013100786
(43) Veröffentlichungstag der Anmeldung: 02.12.2015
(73) Patentinhaber: KNORR-BREMSE Systeme für Nutzfahrzeuge GmbH, 80809 München (DE)
(72) Erfinder: SIEBKE, Alf, 86938 Schondorf am Ammersee (DE)
(86) Internationale Anmeldenummer: PCT/EP2014/051401
(87) Internationale Veröffentlichungsnummer: WO 2014/114747

(56) Entgegenhaltungen:
- EP-A1- 0 421 066
- US-A- 4 937 554
- US-A- 5 339 069

## Beschreibung

Die Erfindung betrifft eine Scheibenbremse, insbesondere für ein Kraftfahrzeug, mit einer Lüftspielüberwachungsvorrichtung nach dem Oberbegriff des Anspruchs 1. Die Erfindung bezieht sich auch auf ein Verfahren zur Lüftspielüberwachung einer Scheibenbremse.

Derartige Scheibenbremsen sind in unterschiedlichen Ausführungen bekannt. Für ihre sichere und zuverlässige Funktion ist es notwendig, dass zwischen ihren Reibpartner (Bremsbeläge und Bremsscheibe) und unter allen Betriebsbedingungen ein festgelegter Abstand, der als Lüftspiel bezeichnet wird, eingehalten wird.

Es sind Verschleißnachstellvorrichtungen in unterschiedlichen Ausführungen bekannt, wie z.B. mechanische Nachsteller, die bei den in schweren Nutzfahrzeugen heute üblichen, pneumatisch wirkenden Scheibenbremsen für ein in bestimmten Grenzen konstantes Lüftspiel sorgen. Dabei wird bei jeder Bremsbetätigung die Nachstellvorrichtung, z.B. durch ein Zustellelement einer Zuspannvorrichtung der Scheibenbremse, aktiviert. Bei Verschleiß von Bremsbelägen und Bremsscheibe erfolgt ein automatisches Nachstellen der Beläge mittels der Nachstellvorrichtung z.B. durch eine Verstellbewegung von längenveränderlichen Druckstempeln.

Ein konstruktiv vorgegebenes Lüftspiel ist in Form fester geometrischer Größen in den am Nachstellvorgang beteiligten Bauelementen abgebildet. Eine durchgehende Überwachung des Lüftspiels ist aufgrund der rein mechanischen Gegebenheiten bzw. wegen einer fehlenden Sensierung nicht möglich. Daher ist heute nur eine im Rahmen der regelmäßigen Bremseninspektion durchzuführende manuelle Messung des Lüftspiels vorgesehen. Allerdings erfolgt diese Überprüfung naturgemäß nur in größeren Zeit- bzw. Laufleistungsabständen, z.B. bei Belagwechsel und außerdem nur im kalten Zustand der Scheibenbremse. Somit bleibt das Lüftspiel über lange Fahrstrecken und während unterschiedlicher Betriebszustände der Scheibenbremse unbeobachtet, und etwaige kritische Veränderungen bleiben unerkannt.

Es sind Scheibenbremsenkonstruktionen bekannt, die eine Überwachung des Lüftspiels ermöglichen und darüber hinaus sogar seine aktive Einstellung bzw. Korrektur während des Betriebs. Z. B. wird dies bei einer pneumatisch betätigten Scheibenbremse erreicht, indem man die Nachstelleinrichtung elektrisch antreibt und damit die Bremsbeläge relativ zur Bremsscheibe bewegt. Eine entsprechende Steuerlogik nutzt Betriebsparameter des elektrischen Antriebs, um das vorhandene Lüftspiel zu messen und ggf. ein gewünschtes Lüftspiel einzustellen. DE 19731696 A1 illustriert dazu ein Beispiel.

Jedoch haben sich derartige Konstruktionen bisher im Markt nicht durchsetzen können, bedingt durch den erheblichen technologischen Entwicklungssprung wie auch die zugehörigen Kosten.

Eine weitere Bremsenbauart, die eine Lüftspielüberwachung ermöglichen kann, ist in Form einer elektromechanischen Scheibenbremse bekannt. Die Betätigung der Bremsmechanik erfolgt dabei rein elektrisch und mit der für das Bremsen erforderlichen Steuerelektronik kann eine Lüftspielüberwachung und -einstellung dargestellt werden. Diese Konstruktion stellt jedoch einen noch größeren technologischen Schritt dar, und der serienmäßige Einsatz solcher Systeme bei Nutzfahrzeugen ist nicht absehbar. Ein Beispiel hierzu illustriert das Dokument DE 199933962 C2.

Dokument US4937554 offenbart eine Scheibenbremse gemäß dem Oberbegriff des Anspruchs 1.

Daher besteht die Aufgabe der vorliegenden Erfindung darin, eine Scheibenbremse, insbesondere pneumatische Scheibenbremse, herkömmlicher Bauart mit möglichst geringem baulichen und kostenmäßigen Aufwand mit einer Lüftspielüberwachung zu verbessern.

Eine weitere Aufgabe besteht darin, eine verbessertes Verfahren zum Überwachen eines Lüftspiels zu schaffen.

Die Aufgabe wird durch eine Scheibenbremse mit den Merkmalen des Anspruchs 1, durch ein Verfahren mit den Merkmalen des Anspruchs 11 gelöst.

Ein Grundgedanke der Erfindung besteht darin, dass eine Lüftspielüberwachungsvorrichtung mit einer Steuereinrichtung vorgesehen ist, welche mit dem Verschleißsensor und dem Bremssteuergerät in Verbindung steht. Damit wird ein bereits bestehender Verschleißsensor, der bei Scheibenbremsen häufig eingesetzt ist, benutzt. Eine erfindungsgemäße Scheibenbremse, insbesondere für ein Kraftfahrzeug, umfasst eine Zuspannvorrichtung, insbesondere mit einem Bremshebel, eine Nachstelleinrichtung, die mit der Zuspannvorrichtung, insbesondere mit dem Bremshebel, zur Nachstellung eines Verschleißes von Bremsbelägen und Bremsscheibe gekoppelt ist, einen Verschleißsensor zur Erfassung eines Verschleißwertes von Bremsbelägen und Bremsscheibe, und ein Bremssteuergerät. Die Scheibenbremse weist eine Lüftspielüberwachungsvorrichtung mit einer Steuereinrichtung auf, welche mit dem Verschleißsensor und dem Bremssteuergerät in Verbindung steht. Zur Einbeziehung von Nebenbedingungen und zur Abschätzung von Trends und erfassten Messwerten weist die Lüftspielüberwachungsvorrichtung erfindungsgemäß weiterhin mindestens eine Temperaturerfassung auf. Hierbei können schon vorhandene Temperatursensoren oder auch zusätzliche eingesetzt werden, wobei die Lüftspielüberwachungsvorrichtung für ein Einlernen weiterer Kenngrößen der Scheibenbremse ausgebildet ist, wobei diese weiteren Kenngrößen in die Auswertung der Messwerte einbezogen werden.

Daraus ergibt sich der Vorteil, dass mit geringstem Aufwand eine Scheibenbremse mit einer Lüftspielüberwachungsvorrichtung geschaffen wird.

Ein erfindungsgemäßes Verfahren zum Überwachen eines Lüftspiels einer solchen Scheibenbremse umfasst die Verfahrensschritte (S1) Bilden von aktuellen Wertepaaren aus aktuellen Bremsdruckwerten und erfassten aktuellen Signalwerten des Verschleißsensors während eines Bremsvorgangs; (S2) Vergleichen der gebildeten aktuellen Wertepaare mit vorher gespeicherten Referenzwerten; und (S3) Auswerten des Vergleichens und Ausgeben von Meldungen zum Überwachen des Lüftspiels.

Weiterhin werden im Verfahrensschritt (S3) erfindungsgemäß Auswerten thermische Einflüsse mittels einer Temperaturerfassung miteinbezogen, wobei weitere Kenngrößen der Scheibenbremse eingelernt und miteinbezogen werden, wodurch die Zuverlässigkeit der Meldungen erhöht wird.

Damit ist es vorteilhaft möglich, unzulässige Abweichungen von definierten bzw. vorher festgelegten Werten eines Lüftspiels zu erkennen und anzuzeigen bzw. zu melden.

Weitere vorteilhafte Ausgestaltungen sind in den Unteransprüchen angegeben.

In einer Ausführung ist die Steuereinrichtung der Lüftspielüberwachungsvorrichtung zur Erfassung eines aktuellen Signalwertes des Verschleißsensors mit einer Erkennungseinheit ausgebildet ist. Die Erkennungseinheit kann eine zeitliche Veränderung des aktuellen Signalwertes des Verschleißsensors erkennen. Das ist dann besonders von Vorteil, wenn der Verschleißsensor verstellt wird. So kann sofort eine Veränderung erfasst werden.

Eine weitere Ausführung sieht vor, dass die Steuereinrichtung der Lüftspielüberwachungsvorrichtung zur Bildung von aktuellen Wertepaaren aus aktuellen Bremsdruckwerten und erfassten aktuellen Signalwerten des Verschleißsensors und zum Vergleich der aktuellen Wertepaare mit gespeicherten Referenzwerten mit einer Vergleichseinheit versehen ist. Die Referenzwerte können z.B. Druck-Weg-Kennlinien eines Bremszylinders der zugehörigen Scheibenbremse sein. Besonders vorteilhaft ist es, wenn diese Druck-Weg-Kennlinien bei Neuzustand eingelernt werden können, was eine andere Ausführung ermöglicht.

So können die aktuellen Bremsdruckwerte aus dem Bremssteuergerät stammen oder/und Ausgangswerte mindestens eines anderen Sensors sein. Das Bremssteuergerät kann entsprechende Tabellen- und/oder Kennlinienwerte aufweisen. Natürlich kann auch ein vorhandener Drucksensor oder auch Kraftsensor mit verwendet werden. Auch die gespeicherten Referenzwerte sind in dem Bremssteuergerät gespeichert.

Außerdem können die gespeicherten Referenzwerte in einer Speichereinheit der Steuereinrichtung gespeichert sein. Hierbei ist es von Vorteil, wenn dies die eingelernte Kennlinienwerte und weitere eingelernte Werte sind, da dann eine größere Exaktheit möglich ist.

In einer noch weiteren Ausführung weist die Steuereinrichtung der Lüftspielüberwachungsvorrichtung eine Auswerteeinheit zur Auswertung der Ergebnisse der Vergleichseinheit auf. Auf diese Weise kann eine Differenzierung der erfassten Werte anhand von Trends und Nebenbedingungen erfolgen. Warnungen und Anzeigen können diesbezüglich exakt erfolgen.

Weiterhin ist vorgesehen, dass die Lüftspielüberwachungsvorrichtung eine Meldeeinheit umfasst, welche anhand der Auswertung der Auswerteeinheit Meldungen zum Stand der Lüftspielüberwachung akustisch, visuell, haptisch oder/und alphanumerisch meldet. Damit kann ein Fahrer des Fahrzeugs früh genug auf Probleme oder Einhaltung von Wartungsfristen bzw. Aufsuchen einer Werkstatt aufmerksam gemacht werden. Außerdem können die Meldungen gespeichert und für Wartungspersonal abrufbar sein.

Die Steuereinrichtung der Lüftspielüberwachungsvorrichtung kann Bestandteil des Bremssteuergerätes sein, wodurch sich kein wesentlicher zusätzlicher Platzbedarf an der Scheibenbremse ergibt.

Im Verfahrensschritt (S1) Bilden von aktuellen Wertepaaren (p/U) werden die aktuellen Bremsdruckwerte von dem Bremssteuergerät oder/und einem zusätzlichen Sensor geliefert. Die Bremsdruckwerte sind in dem Bremssteuergerät schon vorhanden, so müssen keine zusätzlichen Sensoren mit Platzbedarf installiert werden.

Es ist in eine Ausführung vorgesehen, dass im Verfahrensschritt (S3) Auswerten ein vorher festlegbares, nominelles Lüftspiel ohne Nachstellung festgestellt wird, wenn ein aktuelles Wertepaar einem gespeicherten Wertepaar, das einem korrekten Lüftspiel zugeordnet ist, entspricht, und das darauf folgende Wertepaar keine Veränderung des erfassten aktuellen Signalwertes des Verschleißsensors, jedoch einen starken Anstieg des Bremsdrucks aufweist. So ist eine einfache Fallunterscheidung von den weiteren Fällen möglich.

Dabei wird im Verfahrensschritt (S3) Auswerten ein vorher festlegbares, nominelles und aufgrund von Verschleiß vergrößertes Lüftspiel mit Nachstellung festgestellt wird, wenn ein aktuelles Wertepaar einem gespeicherten Wertepaar, das einem korrekten Lüftspiel zugeordnet ist, entspricht, und das darauf folgende Wertepaar eine Veränderung des erfassten aktuellen Signalwertes des Verschleißsensors, jedoch keinen starken Anstieg des Bremsdrucks aufweist.

Und für eine weiteren Fall kann im Verfahrensschritt (S3) Auswerten ein vorher festlegbares, nominelles Lüftspiel als unterschritten festgestellt werden, wenn der Bremsdruck eines aktuellen Wertepaars kleiner als der Bremsdruck ist, der einem vorher festlegbaren, korrekten Lüftspiel zugeordnet ist, und das darauf folgende Wertepaar keine Veränderung des erfassten aktuellen Signalwertes des Verschleißsensors, jedoch einen starken Anstieg des Bremsdrucks oder eine Veränderung des erfassten aktuellen Signalwertes des Verschleißsensors, jedoch keinen starken Anstieg des Bremsdrucks aufweist.

Auf diese Weise kann vorteilhaft eine Fallunterscheidung anhand der Wertepaare vorgenommen werden, um das Lüftspiel zu überwachen.

Eine weitere Erhöhung der Zuverlässigkeit wird dadurch erreicht, dass im Verfahrensschritt (S3) Auswerten ein Ausgeben einer Warnung bzw. eines Warnsignals erst nach einer bestimmten Anzahl von Bremsungen erfolgt.

Mit einem zuvor durchgeführten Einlernen der Referenzwerte in das Bremsteuergerät oder/und die Speichereinheit ist ebenfalls eine Erhöhung der Zuverlässig möglich.

Zudem ist es in einer weiteren Ausführung vorteilhaft ermöglicht, dass ein Reibepunkt festgestellt werden kann, indem die aktuellen Wertepaare mit gespeicherten Wertepaaren verglichen werden, wenn ein aktuelles Wertepaar der aktuellen Wertepaare, die mit gespeicherten Wertepaaren verglichen werden, einen starken Anstieg des Bremsdrucks aufweist.

Mit der erfindungsgemäß Lüftspielüberwachungsvorrichtung und dem entsprechenden erfindungsgemäßen Verfahren zum Überwachen eines Lüftspiels kann das aktuelle Lüftspiel kontinuierlich bzw. ausreichend häufig erfasst und überwacht werden.

Es ist eine differenzierte Erkennung von vergrößertem, korrektem und unterschrittenem Lüftspiel möglich

Das Lüftspiel kann spezifisch für jede Bremse überwacht und erfasst werden.

Der Aufwand hierzu ist minimiert, indem kein zusätzlicher Platzbedarf erforderlich ist und Ausgabewerte vorhandener Funktionseinheiten weiter benutzt werden.

Zusätzliche Sensoren an der Radbremse zur Erfassung des Lüftspiels bzw. Lüftspalts sind nicht erforderlich. Die dazu gehörigen separaten elektronischen Auswerteeinheiten (Soll-/Istwert-Vergleich) und Ausgabegeräte können entfallen.

Die Erfindung wird nun anhand beispielhafter Ausführungen mit Bezug auf die beigefügten Zeichnungen näher erläutert. Hierbei zeigen:
- Fig. 1: eine schematische Teilschnittansicht eines Ausführungsbeispiels einer erfindungsgemäßen Scheibenbremse mit einer Lüftspielüberwachungsvorrichtung;
- Fig. 2: eine schematische Schnittansicht des Ausführungsbeispiels längs der Linie II-II nach Fig. 1 in einer Variante;
- Fig. 3: eine vergrößerte Teilperspektivansicht eines Antriebs einer Nachstelleinrichtung des Ausführungsbeispiels nach Fig. 1;
- Fig. 4: eine schematische Draufsicht auf den Antrieb;
- Fig. 5: ein schematisches Diagramm einer Druck-Weg-Kennlinie;
- Fig. 5a: ein schematisches Diagramm eines Sensorsignals;
- Fig. 6: ein schematisches Diagramm einer Sensorkennlinie;
- Fig. 7: ein schematisches Blockschaltbild einer Lüftspielüberwachungsvorrichtung; und
- Fig. 8: ein Flussdiagramm eines Ausführungsbeispiels eines erfindungsgemäßen Verfahrens.

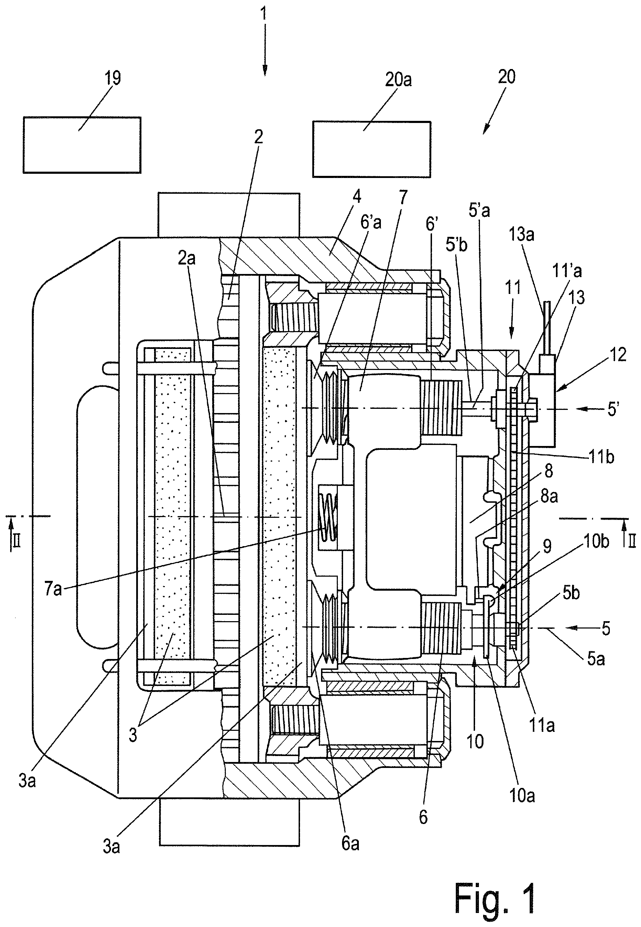

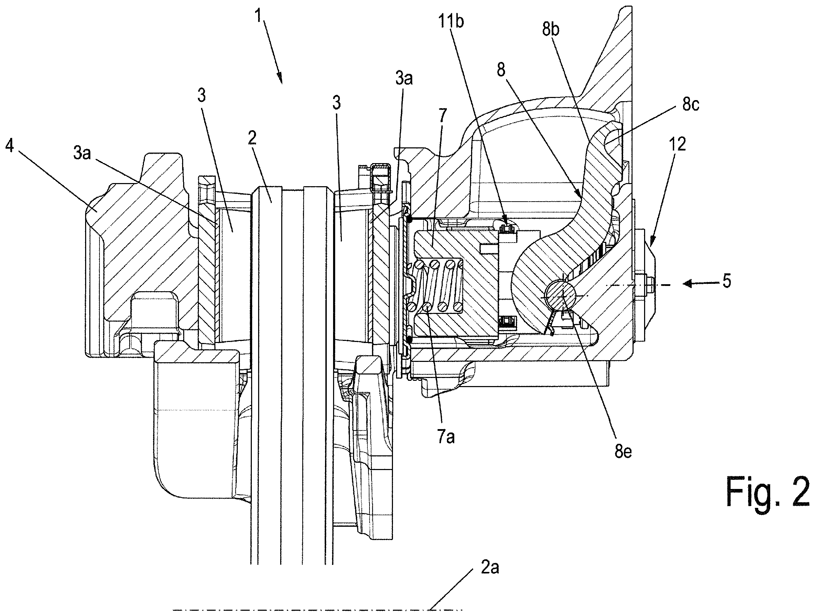

Fig. 1 zeigt eine schematische Teilschnittansicht eines Ausführungsbeispiels einer erfindungsgemäßen Scheibenbremse 1 mit einer Lüftspielüberwachungsvorrichtung 20. In Fig. 2 ist eine schematische Schnittansicht des Ausführungsbeispiels längs der Linie II-II nach Fig. 1 in einer Variante dargestellt.

Die Scheibenbremse 1 weist eine Bremsscheibe 2 mit einer Bremsscheibenachse 2a auf. Die Bremsscheibe 2 ist von einem, hier als Schwimmsattel ausgeführten, Bremssattel 4 übergriffen. Beiderseits der Bremsscheibe 2 ist hier jeweils ein Bremsbelag 3 mit jeweils einem Bremsbelagträger 3a angeordnet. Der in den Figuren 1 und 2 auf der linken Seite der Bremsscheibe 2 befindliche Bremsbelag 3 wird reaktionsseitiger Bremsbelag 3 und der auf der rechten Seite der Bremsscheibe 2 angeordnete Bremsbelag 3 wird zuspannseitiger Bremsbelag 3 genannt.

In diesem Ausführungsbeispiel ist die Scheibenbremse 1 als zweistempelige Bremse mit zwei Spindeleinheiten 5 und 5' ausgebildet. Jede Spindeleinheit 5, 5' weist einen Gewindestempel 6, 6' auf, der als Hohlwelle mit einem Außengewinde ausgebildet ist. In dem Gewindestempel 6 der einen Spindeleinheit 5 ist eine Nachstelleinrichtung 10 eingesetzt, auf die unten noch näher eingegangen wird. Eine Achse dieser Spindeleinheit 5 wird daher als Nachstellerachse 5a bezeichnet. Die Nachstelleinrichtung 10 ist mit einer Nachstellerwelle 5b, welche mit dem Gewindestempel 6 drehfest zusammenwirkt, versehen.

Die andere Spindeleinheit 5' weist eine Achse, die als Mitnehmerachse 5'a bezeichnet ist, und eine Mitnehmerwelle 5'b auf, die in dem Gewindestempel 6' der anderen Spindeleinheit 5' eingesetzt ist und mit dem Gewindestempel 6' in einer drehfesten Verbindung steht.

Der zuspannseitige Bremsbelagträger 3a steht mit den Spindeleinheiten 5, 5' über Druckstücke 6a, 6'a, die an Enden der Gewindestempeln 6, 6' angeordnet sind, in Verbindung. Der andere, reaktionsseitige Bremsbelagträger 3a ist auf der anderen Seite der Bremsscheibe im Bremssattel 4 festgelegt. Die Gewindestempel 6, 6' sind jeweils in einer Traverse 7, die auch als Brücke bezeichnet wird, mit ihren Außengewinden in Gewindebohrungen der Traverse 7 verdrehbar angeordnet. Das Gewinde ist hier mit einer Steigung im Bereich der Selbsthemmung ausgeführt. Durch die Drehbewegung der Gewindestempel 6, 6' in der Traverse 7 ändert sich die Axialposition der Gewindestempel 6, 6' relativ zu der Traverse 7. Mit dem Begriff Axialposition ist hier eine Position der Gewindestempel 6, 6' in Axialrichtung der Bremsscheibenachse 2a und der Achsen 5a, 5'a gemeint. Die Achsen 5a, 5'a verlaufen hier parallel zu der Bremsscheibenachse 2a.

Die Traverse 7 und die Gewindestempel 6, 6' sind von einer Zuspannvorrichtung, hier ein Bremshebel 8 mit einer Schwenkachse 8e (siehe Fig. 2) rechtwinklig zu der Bremsscheibenachse 2a der Bremsscheibe 2 betätigbar. Der Bremshebel 8 weist einen Hebelkörper 8d auf, welcher über Lagerabschnitte mit der Traverse 7 in Zusammenwirkung steht.

Die Traverse 7 ist in Richtung der Bremsscheibenachse 2a durch den Bremshebel 8 verstellbar. Eine Bewegung auf die Bremsscheibe 2 zu wird als Zuspannbewegung bezeichnet, und eine Bewegung in Gegenrichtung wird Lösebewegung genannt. Eine nicht weiter erläuterte Rückstellfeder 7a ist in der Mitte der Traverse 7 in einer entsprechenden Ausnehmung auf der belagseitigen Seite der Traverse 7 aufgenommen und stützt sich am Bremssattel 4 ab. Mittels der Rückstellfeder 7a wird die Traverse 7 bei der Lösebewegung in die in Fig. 1 und Fig. 2 gezeigte gelöste Stellung der Scheibenbremse 1 verstellt.

Ein Abstand zwischen den Bremsbelägen 3 und der Bremsscheibe 2 in der gelösten Stellung wird als Lüftspiel bezeichnet. Infolge von Belag- und Scheibenverschleiß wird dieses Lüftspiel größer. Wenn dies nicht kompensiert wird, kann die Scheibenbremse 1 ihre Spitzenleistung nicht erreichen, da ein Betätigungshub der Betätigungsmechanik, d.h. hier der Betätigungshub bzw. ein Schwenkwinkel des Bremshebels 8, vergrößert ist.

Die Scheibenbremse 1 kann unterschiedliche Kraftantriebe aufweisen. Der Bremshebel 8 wird hier z.B. pneumatisch betätigt. Dazu weist der Bremshebel 8 einen Arm 8b auf, der mit dem Hebelkörper 8d verbunden ist (Fig. 2). An dem freien Ende des Arms 8b ist ein Krafteinleitungsabschnitt 8c angeordnet, der mit einer Kraftquelle, z.B. einem Pneumatikzylinder, zusammenwirkt. Zu Aufbau und Funktion einer pneumatischen Scheibenbremse 1 wird auf die entsprechende Beschreibung der DE 197 29 024 C1 verwiesen.

Die Nachstelleinrichtung 10 ist zur Verschleißnachstellung eines vorher festgelegten Lüftspiels, das als Nominallüftspiel bezeichnet wird, ausgebildet. Unter dem Begriff "Nachstellung" ist eine Lüftspielverkleinerung zu verstehen. Das vorher festgelegte Lüftspiel ist durch die Geometrie der Scheibenbremse 1 bestimmt und weist ein so genanntes konstruktives Lüftspiel auf. Mit anderen Worten, die Nachstelleinrichtung 10 verkleinert ein vorhandenes Lüftspiel, wenn dieses in Bezug auf das vorher festgelegte Lüftspiel zu groß ist.

Die Nachstelleinrichtung 10 ist an der einen Spindeleinheit 5 koaxial zu dieser, zu deren Gewindestempel 6 und der Nachstellerachse 5a angeordnet. Die Bauteile und Funktionsgruppen der Nachstelleinrichtung 10, welche z.B. in dem Dokument DE 10 2004 037 771 A1 ausführlich beschrieben ist, ist um die Nachstellerwelle 5b herum in axialer Richtung und somit in Richtung der Nachstellerachse 5a angeordnet. Die Nachstelleinrichtung 10 ist mit ihrem zuspannseitigen Ende in nicht näher erläuterter Weise im Bremssattel 4 gelagert. Hierzu wird auf das Dokument DE 10 2004 037 771 A1 verwiesen. An dem zuspannseitigen Ende der Nachstellerwelle 5b ist ein Synchronrad 11a einer Synchroneinrichtung 11 drehfest angebracht. Über die Synchroneinrichtung 11, die unten noch beschrieben wird, steht die Nachstellerwelle 5b mit der Mitnehmerwelle 5'b einer Mitnehmereinrichtung in Wirkverbindung.

In der anderen Spindeleinheit 5' ist die Mitnehmereinrichtung mit der Mitnehmerwelle 5'b koaxial zu der anderen Spindeleinheit 5', zu deren Gewindestempel 6' und der Mitnehmerachse 5'a angeordnet. In dem zuspannseitigen Endbereich der Mitnehmerwelle 5'b ist wie bei der Nachstellerwelle 5b ein Synchronrad 11'a der Synchroneinrichtung 11 drehfest angebracht. Das zuspannseitige Ende der Mitnehmerwelle 5'b ist hier mit einem Verschleißsensor 12 gekoppelt, der in einem haubenförmigen Gehäuse über dem zuspannseitigen Ende der Mitnehmerwelle 5'b auf dem Bremssattel 4 angeordnet ist. Der Verschleißsensor 12 ist über die Mitnehmerwelle 5b mit dem Gewindestempel 6' drehfest gekoppelt. Ein Aufnehmerelement des Verschleißsensors kann z.B. ein Winkelsensor sein, z.B. ein Potentiometer. Es erfasst die Winkellage des Gewindestempels 6' um die Mitnehmerachse 5'a. Die Auswertung dieser Winkellage lässt einen Rückschluss auf den Verschleißzustand der Bremsbeläge 3 und der Bremsscheibe 2 zu, denn der Gewindestempel 6' ist über die Mitnehmerwelle 5'b und somit durch die unten noch näher erläuterte Synchroneinrichtung 11 mit dem Gewindestempel 6 gekoppelt. So dient der Verschleißsensor 12 zur Erfassung eines Nachstellwegs, d.h. des Verschleißzustands, und ist hier über eine mit einem Steckverbinder 13 versehene Anschlussleitung 13a (elektrisch oder optisch leitend) mit einem Bremssteuergerät 19, welches u.a. die Auswertung des vom Verschleißsensor 12 erfassten Messwertes vornehmen kann, verbunden.

Der Verschleißsensor 12 steht zudem auch mit einer Steuereinrichtung 20a der Lüftspielüberwachungsvorrichtung 20 in Verbindung. Dies wird unten noch ausführlich erläutert.

Übliche pneumatische Scheibenbremsen 1, wie z.B. in der DE 197 29 024 C1 beschrieben, weisen die Nachstelleinrichtung 10 zusammen mit der Mitnehmereinrichtung als integrierte, automatisch arbeitende Verschleiß-Nachstellvorrichtungen auf. Durch mechanisches Justieren der Position der Gewindespindeln 6, 6' in der Traverse 7 wird ein vorangegangener Verschleiß der Reibpartner Bremsbeläge 3 und Bremsscheibe 2 ausgeglichen und dadurch das vorher festgelegte Lüftspiel eingehalten.

Ein Antrieb für die Justierbewegung der Nachstelleinrichtung 10 erfolgt durch eine Nebenfunktion des Bremshebels 8 mit einem Abtriebsfinger 8a (oder mehreren). Der Bremshebel 8 wird wie oben schon erwähnt z.B. durch einen Bremszylinder (pneumatisch, hydraulisch, elektrisch) betätigt.

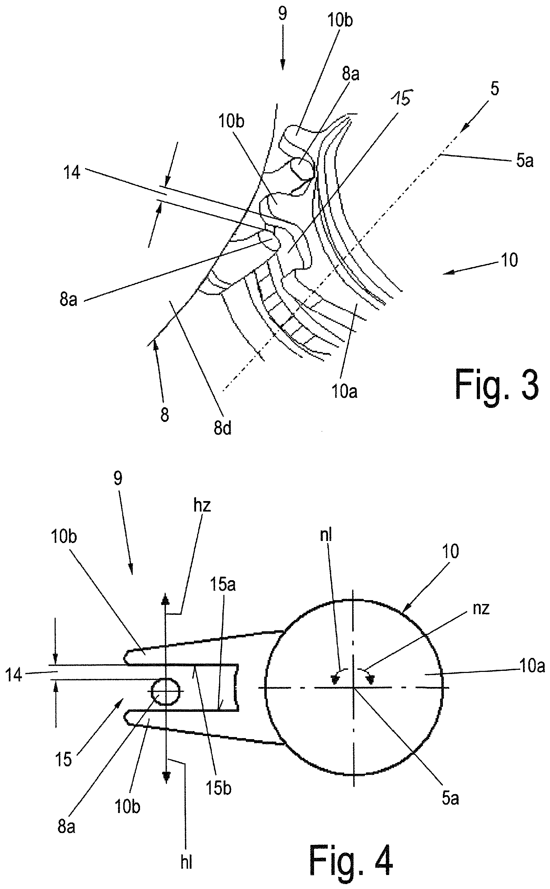

So steht die Nachstelleinrichtung 10 über einen Antrieb 9 mit dem Bremshebel 8 in Zusammenwirkung. Der Antrieb 9 umfasst einen Betätiger, welcher als ein mit dem Bremshebel 8 verbundener Abtriebsfinger 8a ausgebildet ist, und einen Schaltgabelfinger 10b eines Antriebselementes 10a der Nachstelleinrichtung 10. Der Antrieb 9 wird im Zusammenhang mit den Figuren 3 und 4 noch näher beschrieben.

Beim Antreiben der Nachstelleinrichtung 10 durch den Antrieb 9 mittels des Bremshebels 8 wird z.B. eine Einwegkupplung der Nachstelleinrichtung 10 betätigt, die z.B. über eine Rutschkupplung mit der Nachstellerwelle 5b gekoppelt ist. Eine ausführliche Beschreibung der Funktion der Nachstelleinrichtung 10 ist dem Dokument DE 10 2004 037 771 A1 zu entnehmen.

Die Justierbewegung des einen Gewindestempels 6, die auch eine Dreh- oder Schwenkbewegung der Nachstellerwelle 5b ist, wird mittels der Synchroneinrichtung 11 auf die Mitnehmerwelle 5'b und somit den anderen Gewindestempel 6' übertragen. Dazu sind die Nachstellerwelle 5b der Nachstelleinrichtung 10 und die Mitnehmerwelle 5'b der Mitnehmereinrichtung durch die Synchroneinrichtung 11 derart gekoppelt, dass eine Verdrehbewegung des Gewindestempels 6 um die Nachtstellerachse 5a eine entsprechende Verdrehbewegung des Gewindestempels 6' um die Mitnehmerachse 5'a bewirkt und umgekehrt. Die Synchroneinrichtung 11 ist in dem in Fig. 1 dargestellten Beispiel an den zuspannseitigen Enden der Nachstellerwelle 5b und der Mitnehmerwelle 5'b angeordnet. In der Variante nach Fig. 2 befindet sich die Synchroneinrichtung 11 auf der Zuspannseite der Traverse 7. Die Synchroneinrichtung 11 umfasst das Synchronrad 11a, das mit dem Gewindestempel 6 der einen Spindeleinheit 5 und mit der Nachstellerwelle 5b der Nachstelleinrichtung 10 gekoppelt ist, das andere Synchronrad 11'a, das mit der Gewindestempel 6' der anderen Spindeleinheit 5' und mit der Mitnehmerwelle 5'b der Mitnehmereinrichtung gekoppelt ist, und ein Synchronmittel 11b, mit welchem die Synchronräder 11a und 11'a gekoppelt sind. In diesem Ausführungsbeispiel ist das Synchronmittel 11b ein Zugmittel, im vorliegenden Beispiel eine Kette. So sind die Synchronräder 11a, 11'a als Kettenräder ausgebildet. Damit ist eine synchrone Bewegung der Gewindestempel 6, 6' der Spindeleinheiten 5 und 5' bei Verschleißnachstellvorgängen (angetrieben durch die Nachstellerwelle 5b der Nachstelleinrichtung 10) und Einstellungen bei Wartungsarbeiten, z.B. Belagwechsel, (manueller Antrieb z.B. über ein Betätigungsende der Nachstellerwelle 5b der Nachstelleinrichtung 10, was nicht dargestellt, aber leicht vorstellbar ist) gewährleistet.

In Fig. 3 ist eine vergrößerte Teilperspektivansicht des Antriebs 9 der Nachstelleinrichtung 10 des Ausführungsbeispiels nach Fig. 1 dargestellt. Fig. 4 zeigt dazu eine schematische Draufsicht auf den Antrieb 9.

Auf der linken Seite der Fig. 3 ist der Hebelkörper 8d des Bremshebels 8 nur schematisch angedeutet, wobei auf der rechten Seite die Nachstelleinrichtung 10 mit der Nachstellerachse 5a der einen Spindeleinheit 5 zum Teil gezeigt ist. An dem Hebelkörper 8d sind hier zwei Abtriebsfinger 8a in Zapfen- oder Stabform angebracht, die hier mit drei Schaltgabelfingern 10b des Antriebselementes 10a der Nachstelleinrichtung 10 in Eingriff stehen, wobei die Abtriebsfinger 8a hier jeweils in einer Lücke 15 zwischen zwei Schaltgabelfingern 10b angeordnet sind. Fig. 4 zeigt in der Draufsicht die Anordnung eines Abtriebsfingers 8a in der Lücke 15 zwischen zwei Schaltgabelfingern 10b.

Die Bremshebelachse 8e, um welche der Bremshebel 8 verschwenkbar ist, verläuft rechtwinklig zu der Nachstellerachse 5a (siehe auch Fig. 2). Eine Verschwenkbewegung des Bremshebels 8 führt dann zu einer Schwenkbewegung der Abtriebsfinger 8a, welche in Fig. 4 in einer Richtung nach oben in der Fig. 4 (angedeutet durch einen Pfeil Zuspannen hz) oder nach unten (angedeutet durch einen Pfeil Lösen hl), wobei diese Schwenkbewegung auf die Schaltgabelfinger 10b und somit auf das Antriebselement 10a der Nachstelleinrichtung 10 übertragen wird.

In unbetätigter Stellung, d.h. in Lösestellung, wie in Fig. 3 und 4 gezeigt, ist zwischen einer Betätigungskontur des Abtriebsfingers 8a und einer Schaltgabelwand 15b des Schaltgabelfingers 10b des Antriebselementes 10a der Nachstelleinrichtung 10 ein Spiel bzw. Leerweg 14 vorgesehen. Dieser Leerweg repräsentiert unter Berücksichtigung der Übersetzungsverhältnisse am Bremshebel 8 das konstruktive Lüftspiel der Scheibenbremse 1. Mit anderen Worten, eine Betätigung der Nachstelleinrichtung 10a erfolgt erst, nachdem die Traverse 7 bei einer Zuspannung der Scheibenbremse 1, d.h. bei Bremsbetätigung, durch eine Verschwenkung des Bremshebels 8 um einen größeren Weg als das konstruktive Lüftspiel auf die Bremsscheibe 2 hin verschoben worden ist.

Unabhängig von der jeweiligen baulichen Ausführung der Nachstelleinrichtung 10, die hier nur beispielhaft angegeben ist, ist das konstruktiv festgelegte Lüftspiel dabei immer durch den Leerweg 14 in der kinematischen Kette zwischen Bremshebel 8 und der Einwegkupplung der Nachstelleinrichtung 10 bestimmt, wobei die Einwegkupplung mit dem Antriebselement 10a verbunden ist. Beim Zuspannen wird dieser Leerweg 14 in der Richtung Zuspannen hz zunächst durchfahren, wobei keine Bewegungsübertragung über die Schaltgabelfinger 10b auf die Nachstelleinrichtung 10 erfolgt. Dabei erfolgt auch keine Nachstellung bzw. Justierung, wodurch das minimale Lüftspiel der Scheibenbremse 1 sichergestellt ist. Das heißt, der Leerweg 14 in der Betätigungsmechanik ist direkt proportional zu dem Lüftspiel.

Sobald der Abtriebsfinger 8a die Schaltgabelwand 15b berührt, wird die Bewegung auf den Schaltgabelfinger 10b aufgrund des Eingriffs mit dem Abtriebsfinger 8a übertragen, woraus sich eine Verschwenkbewegung nz im Uhrzeigersinn des Antriebselementes 10a der Nachstelleinrichtung 10 ergibt. Diese Verschwenkbewegung wird von der mit dem Antriebselement 10a gekoppelten Einwegkupplung auf die Nachstellerwelle 5b übertragen, wobei eine Verkleinerung des Lüftspiels erfolgt.

Beim Lösen der Scheibenbremse 1 wird der Bremshebel 8 zurück verschwenkt, wobei der Abtriebsfinger 8a in Richtung Lösen hl bewegt wird. Dabei kommt er mit der anderen Schaltgabelwand 15a in Berührung und verschwenkt somit das Antriebselement 10a in einer Verschwenkung nl im Gegenuhrzeigersinn. Da das Antriebselement 10a mit der Einwegkupplung der Nachstelleinrichtung 10 gekoppelt ist, wird diese Bewegung nicht auf die Nachtstellerwelle 5b übertragen (dies wäre dann eine Vergrößerung des Lüftspiels, was nicht gewollt ist).

Die Nachstell- bzw. Justierbewegung zur Verkleinerung des Lüftspiels, welche die Nachstellwelle 5b durchführt, wird über die Synchroneinrichtung 11 wie oben beschrieben auf die Mitnehmerwelle 5'b und auch auf den Verschleißsensor 12 übertragen. Der Verschleißsensor 12 erzeugt in Abhängigkeit von der Winkelstellung Mitnehmerwelle 5'b ein zu der Winkelstellung proportionales elektrisches Signal (analog oder digital), welches in einer elektrischen/elektronischen Einrichtung, beispielsweise im Bremssteuergerät 19, als Maß für den Verschleiß der Bremsbeläge 3 und auch der Bremsscheibe 2 der Scheibenbremse 1 zur kontinuierlichen Erfassung des Verschleißes der Reibpartner (Bremsbeläge 3 und Bremsscheibe 2) ausgewertet wird. Damit kann das mit dem Verschleiß fortschreitende Justieren (Ausfahren, Nachstellen) der Gewindespindeln 6, 6' messtechnisch erfasst werden. Diese elektrische/elektronische Einrichtung basiert z.B. auf einer potentiometrischen Messung des Verstellweges, d.h. des Verdrehwinkels, der Gewindespindeln 6, 6', das in jede Radbremse eines zugehörigen Fahrzeugs integriert ist. Die gemessenen Werte werden in einer Auswerteeinheit radspezifisch überwacht und bei Erreichen eines vorgegebenen Verschleißwertes bzw. Grenzwertes (entsprechend dem ausgefahrenen bzw. nachgestellten Zustand der Gewindespindeln 6, 6') erfolgt eine Meldung, z.B. ein akustisches oder/und optisches Warnsignal.

Mit der erfindungsgemäßen Lüftspielüberwachungsvorrichtung 20 werden unzulässige Abweichungen des Lüftspiels von vorher festgelegten Werten erkannt und angezeigt. Die Vorrichtung 20 umfasst eine Steuereinrichtung 20a (Fig. 1), die unten noch näher beschrieben wird. Die Steuereinrichtung 20a ist mit dem Verschleißsensor 12 und dem Bremssteuergerät 19 gekoppelt. Dabei nutzt die Steuereinrichtung 20a Signale des Verschleißsensors 12 und des Bremssteuergerätes 19.

Zunächst wird ein Zusammenhang zwischen einer Zuspannkraft, dem Lüftspiel, einer Nachstellung und dem Verschleißsensor 12 beschrieben.

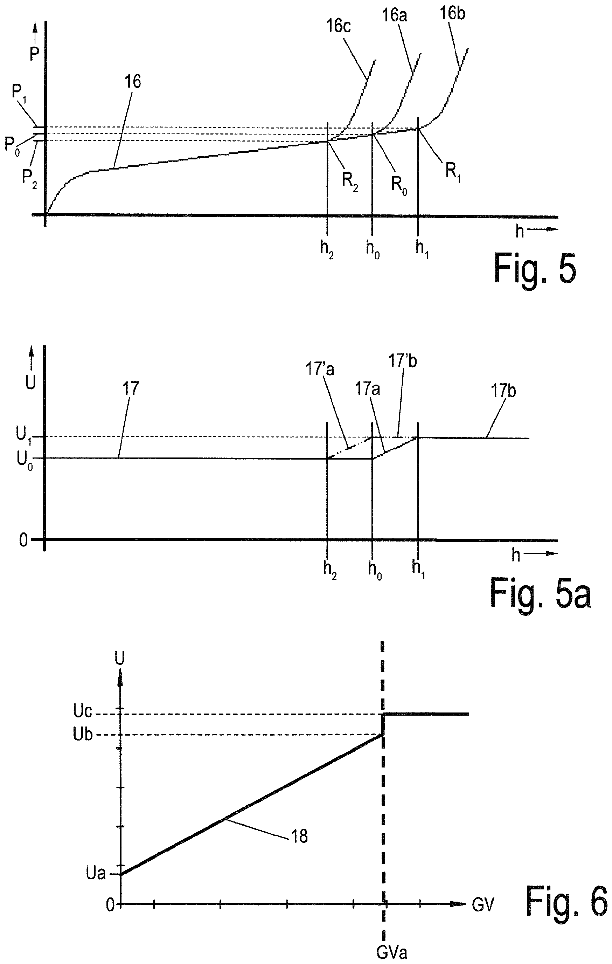

Fig. 5 zeigt dazu ein schematisches Diagramm einer Druck-Weg-Kennlinie. Fig. 5a stellt dazu ein schematisches Diagramm eines Sensorsignals dar.

In dem schematischen Diagramm der Fig. 5 ist ein Bremsdruck p der Zuspannvorrichtung der Scheibenbremse 1 auf einer Ordinate über einem Hebelweg h (Abszisse) dargestellt. Der Bremsdruck p kann z.B. der Luftdruck eines Pneumatikzylinders oder/und Hydraulikzylinders bzw. die Zuspannkraft einer elektromotorischen Bremsbetätigung sein. Unter dem Hebelweg h ist ein Weg des Bremshebels 8 zu verstehen.

Fig. 5a zeigt mit gleicher Abszisse den Hebelweg h wie in Fig. 5 dargestellt. Über dem Hebelweg h ist hier jedoch ein Signalwert U eines Sensorsignals 17 des Verschleißsensors 12 aufgetragen. In diesem Beispiel wird davon ausgegangen, dass der Verschleißsensor 12 ein Potentiometer als Aufnehmerelement aufweist, d.h. ein durch die oben beschriebene Verschwenkung der Mitnehmerwelle 5'b veränderlicher elektrischer Widerstand, der mit einer konstanten elektrischen Spannung beaufschlagt ist. Der Signalwert U ist in diesem Beispiel dann eine elektrische Spannung, welche an dem Aufnehmerelement abgreifbar und zu der Verschwenkung der Mitnehmerwelle 5'b proportional ist. Das heißt, der Signalwert U ist als eine elektrische Spannung proportional zu einer Nachstellung der Nachstelleinrichtung 10. Der Signalwert U verändert sich nur dann, wenn eine Nachstellung erfolgt.

Mit dem Bezugszeichen 16 ist die Kurve einer beispielhaften Druck-(Kraft-)Weg-Kennlinie einer Bremse, z.B. der Scheibenbremse 1, in Fig. 5 angegeben. Der Bremszylinder wirkt mit dem Bremshebel 8 zusammen.

Eine Betätigung der Zuspannvorrichtung umfasst ein Zuspannen und ein Lösen. Im nicht betätigten Zustand (Bremsdruck = 0) stehen Bremszylinder und Bremshebel 8 durch die interne Rückstellfeder 7a in der in Fig. 1, 2 gezeigten Ausgangsstellung bzw. gelösten Stellung. Bei Anstieg des Bremsdrucks p bzw. der Bremszylinderkraftabgabe bewegt z.B. eine (nicht gezeigte) Kolbenstange in Zusammenwirkung mit dem Krafteinleitungsabschnitt 8c (Fig. 2) den Bremshebel 8 und dieser die Zuspannelemente (Traverse 7 mit den Gewindespindeln 6, 6') im Bremssattel 4. Sobald das konstruktive Lüftspiel, das auch nominelles Lüftspiel genannt wird, überwunden ist (Leerweg 14 in Fig. 3 und 4), berührt der Abtriebsfinger 8a des Bremshebels 8 den Schaltgabelfinger 10b des Antriebselementes 10a mit der Einwegkupplung der Nachstelleinrichtung 10. Dies ist bei einem Hebelweg h₀ der Fall.

Beim Zuspannen steigt der Bremsdruck p im Bereich Überbrückung des Lüftspiels bis zum Hebelweg h₀ mit einer relativ geringen Steigung der Kurve 16 an. In diesem Bereich wird das Lüftspiel überbrückt. Das Lüftspiel entspricht damit dem Hebelweg h vom Nullpunkt bis zum Hebelweg h₀. In einem Reibepunkt R₀ schneidet die Kurve 16 des Bremsdrucks p eine Parallele zur Ordinate, die durch den Hebelweg h₀ verläuft. Beim Hebelweg h₀ ist der Kurve 16 ein Bremsdruck p₀ zugeordnet.

Der Begriff "Reibepunkt" ist der Punkt, in welchem die Bremsbeläge 3 an der Bremsscheibe 2 der Scheibenbremse 1 anliegen. Ein weiteres Zuspannen (Zuspannabschnitt 16a) bewirkt dann durch Anpressen der Bremsbeläge 3 mit zunehmender Kraft an die Bremsscheibe 2 einen Bremsvorgang bzw. eine Bremsung, wobei der Bremsdruck p in einem Zuspannabschnitt 16a stark ansteigt. Ein Lösen der Zuspannvorrichtung (durch Verringern des Bremsdrucks p) bewirkt eine Umkehrung des oben beschriebenen Vorgangs.

Fig. 6 stellt ein schematisches Diagramm einer Sensorkennlinie 18 dar. Dabei ist ein Signalwert U, z.B. eine elektrische Spannung, auf der Ordinate über einem Gesamtverschleiß GV auf der Abszisse aufgetragen. Der Gesamtverschleiß GV bezieht sich auf die Reibpartner Bremsbeläge 3 und Bremsscheibe 2. Bei neuen Reibpartnern ist noch kein Verschleiß vorhanden, ein Ausgangswert ist als Signalwert Ua angegeben. Die Sensorkennlinie 18 ist hier linear und erstreckt sich in einer bestimmten Steigung von dem Ausgangswert Ua zu einem Endwert Ub, dem ein Gesamtverschleiß GVa zugeordnet ist. Bei dem Gesamtverschleiß GVa ist ein Austausch zumindest der Bremsbeläge 3 erforderlich, und eine Verschleißgrenze ist erreicht. Dies wird durch einen Spannungssprung auf den Signalwert Uc angegeben, wozu der Verschleißsensor 12 entsprechend ausgebildet ist. Der Signalwert Ua hat als Ausgangswert z.B. eine Spannung von ca. 0,8 V. Der Gesamtverschleiß GVa ist bei einer Spannung beim Signalwert Ub von ca. 3,5 V erreicht. Dann erfolgt ein Spannungssprung auf den Signalwert Uc, der ca. 4 V beträgt. Natürlich können auch andere Spannungswerte oder auch Stromwerte (oder auch andere Werte) als Signalwerte U zur Anwendung kommen.

Es wird eine Fallunterscheidung vorgenommen. Zunächst wird der Fall, in welchem ein aktueller Reibepunkt mit einem Soll-Reibepunkt übereinstimmt, betrachtet. Hierbei fällt gemäß Fig. 5 der Reibepunkt R₀ mit dem Hebelweg h₀ zusammen, und es erfolgt kein Nachstellen durch die Nachstelleinrichtung 1. Dies tritt auf, wenn beispielsweise die Bremsbeläge 3 neu sind oder eine Nachstellung bei einem vorherigen Bremsvorgang erfolgt ist. Das bedeutet, dass ein aktuelles Lüftspiel dem vorher festgelegten Lüftspiel entspricht und eine Nachstellung nicht erforderlich ist. Eine Nachstellung wird also nicht durchgeführt. Die Bremsbeläge 3 liegen schon an der Bremsscheibe 2 an und der Bremsdruck p steigt in dem Bremsabschnitt 16a stark an.

Dazu zeigt Fig. 5a das zugehörige Sensorsignal 17, welches im Ruhezustand der Scheibenbremse 1, also bei nicht betätigter Zuspannvorrichtung, und bei Betätigung bis zur Überwindung des konstruktiven Lüftspiels bis zum Erreichen des Hebelwegs h₀ konstant ist. Dies ist in Fig. 5a durch den Signalwert U₀ angegeben. Der Signalwert U₀ entspricht somit einem Nachstellwert, der von einer zuletzt erfolgten Nachstellung stammt oder bei neuen Bremsbelägen 3 einen Ausgangswert bildet.

Eine weitergehende Bewegung des Abtriebsfingers 8a bei zunehmendem Bremsdruck p im Bremsabschnitt 16a wird zwar auf den Schaltgabelfinger 10b des Antriebselementes 10a der Nachstelleinrichtung 10 (Fig. 3, 4) übertragen, aber eine in der Nachstelleinrichtung 10 vorhandene Überlastkupplung spricht an, da die Bremsbeläge 3 schon an der Bremsscheibe 2 anliegen. Das Antriebselement 10a führt dann eine Relativbewegung zu der feststehenden Nachstellerwelle 5b aus. Somit erfolgt keine Nachstellung. Die Nachstellerwelle 5b und die mit ihr über die Synchroneinrichtung 11 gekoppelte Mitnehmerwelle 5'b mit dem damit gekoppelten Verschleißsensor 12 werden nicht verstellt.

Das Sensorsignal 17 wird also nicht verändert und bleibt konstant auf dem Signalwert U₀.

Weiterhin zeigt Fig. 5 auch die Fälle, in welchen der aktuelle Reibepunkt nicht mit dem Soll-Reibepunkt beim Hebelweg h₀ übereinstimmt. Zunächst wird der Fall betrachtet, in dem das Lüftspiel aufgrund von Verschleiß der Bremsbeläge 3 durch vorangegangene Bremsvorgänge größer geworden ist. D.h., der aktuelle Reibepunkt hat sich zu einem größeren Wert des Hebelzustellwegs h verschoben. Dieser aktuelle Reibepunkt ist hier als Reibepunkt R1 bei einem Hebelweg h1 angegeben. Der Hebelweg h1 ist dabei größer als der vorherige Hebelweg h₀, was dadurch bedingt ist, dass aufgrund des Verschleißes der Bremsbeläge 3 ein größeres Lüftspiel überbrückt werden muss, nämlich das konstruktive Lüftspiel bis zum Hebelweg h₀ und im Anschluss daran das durch den Verschleiß bedingte Lüftspiel bis zum Hebelweg h₁. Beim Erreichen dieses Reibepunkts R₁ mit dem zugeordneten Bremsdruck p₁ steigt der Bremsdruck p in einem Zuspannabschnitt 16b stark an, welcher sich nach rechts in der Fig. 5 verlagert hat.

Beim Erreichen des Hebelwegs h₀ mit dem zugeordneten Bremsdruck p₀ wird aber der aktuelle Reibepunkt R₁ noch nicht erreicht. Nun wird die Nachstelleinrichtung 10 betätigt, da die Bremsbeläge 3 noch nicht an der Bremsscheibe 2 anliegen und somit die Überlastkupplung der Nachstelleinrichtung 10 nicht anspricht. Die weitergehende Bewegung des Abtriebsfingers 8a bei zunehmendem Bremsdruck p>p₀ wird wieder auf den Schaltgabelfinger 10b des Antriebselementes 10a der Nachstelleinrichtung 10 (Fig. 3, 4) übertragen. Das Antriebselement 10a verschwenkt nun die Nachstellerwelle 5b durch die Einwegkupplung. Somit erfolgt eine Nachstellung. Die Nachstellerwelle 5b und die mit ihr über die Synchroneinrichtung 11 gekoppelte Mitnehmerwelle 5'b mit dem damit gekoppelten Verschleißsensor 12 werden verstellt. Dies ist in Fig. 5a durch einen Nachstellsignalabschnitt 17a des Sensorsignals 17, der mit einer bestimmten Schräge nach oben verläuft, angegeben.

Dabei verändert sich der Signalwert Uo, der dem Hebelwert h₀ zugeordnet ist, auf den neuen Signalwert U₁ bei dem Hebelwert h₁. In dem gezeigten Beispiel ist U₁ größer als U₀, aber auch das Umgekehrte kann in einer anderen Ausführung natürlich möglich sein. Nachdem die Nachstellung auf das vorher festgelegte Lüftspiel im Reibepunkt R₁ durchgeführt ist, entspricht der Signalwert U₁ nun dem aktuellen Verschleiß von Bremsbelägen 3 und Bremsscheibe 2. Dieser Signalwert U₁ bleibt konstant bis zu einer Veränderung durch eine nachfolgende Nachstellung. Dies zeigt ein Konstantsignalabschnitt 17b ab dem Hebelwert h₁ in Fig. 5a.

In dem anderen Fall kann das Antriebselement 10a der Nachstelleinrichtung 10 mit seinem Schaltgabelfinger 10b (Fig. 3, 4), z.B. infolge eines Fehlers, eine Drehbewegung (in Fig. 4 in Verschwenkung nl gegen den Uhrzeigersinn) entgegen ihrer funktional festgelegten Drehrichtung Verschwenkung nz (also entgegen dem Sperrsinn der mit dem Antriebselement 10a gekoppelten Einwegkupplung) durchgeführt haben. Damit ist der benötigte Leerweg 14 im Nachstellvorgang reduziert. Daraus resultiert bei der nächsten Bremsung ein Reibepunkt R₂ bei dem Hebelweg h₂, wobei der Hebelweg h₂ kürzer ist als der Hebelweg h₀. Hierbei erfolgt schon eine Bremsung (Bremsabschnitt 16c) vor dem Erreichen des konstruktiven Lüftspiels beim Bremsdruck p₀ und Hebelweg h₀. Nach weiteren Bremsungen ergibt sich ein Verschleiß, der dann schon am dem Reibepunkt R2 in der oben beschriebenen Weise nachgestellt wird. Durch dieses dementsprechend vorzeitige Nachstellen wird ein unerwünscht reduziertes Lüftspiel erzeugt.

Ebenso wird der Verschleißsensor 12 beim früheren Kontakt des Schaltgabelfingers 10b mit dem Abtriebsfinger 8a (Fig. 3, 4) beim Hebelweg h₂ entsprechend früher verschwenkt und ändert den Signalwert U₀ jetzt schon bei dem kürzeren Hebelweg h₂ in einem Signalabschnitt 17'a auf den nun schon beim Hebelweg h₀ auftretenden Konstantsignalabschnitt 17'b. Dies ist in Fig. 5a mit strich-doppelpunktierten Linien für 17'a und 17'b verdeutlicht.

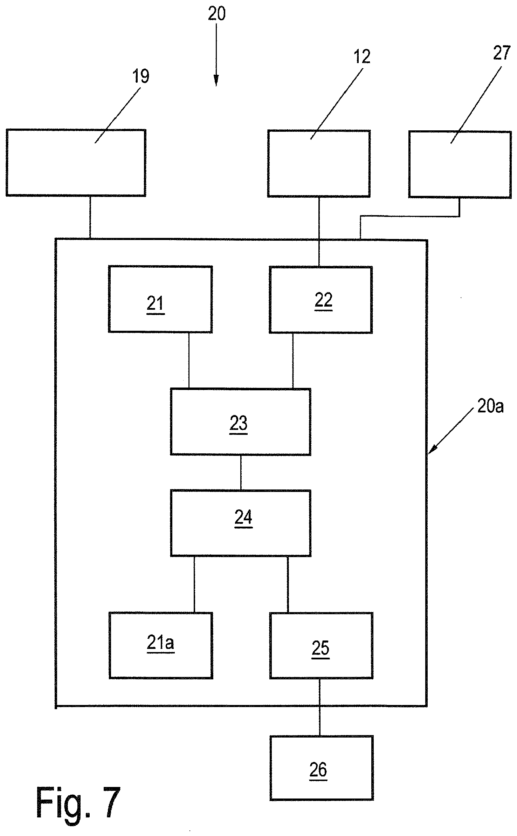

In dem Bremssteuergerät 19 (z.B. ein elektronisches Bremssystem EBS) sind die Bremsdruckwerte p₀, p₁, p₂ (und natürlich auch andere) verfügbar, die bei dem jeweiligen Hebelwert h₀, h₁, h₂ in den Bremszylinder eingesteuert worden sind. Dies ergibt sich aus der Druck-Weg-Kennlinie des Bremszylinders, die in dem Bremssteuergerät 19 als Referenzwert oder/und in einer Speichereinheit 21 der Lüftspielüberwachungsvorrichtung 20 (siehe Fig. 7) hinterlegt ist. Eine vereinfachte, ähnliche Kennlinie 16 ist in Fig. 5 gezeigt. Es gibt also jeweils ein Wertepaar p/u aus Bremsdruck p und einem Sensor-Ansprechsignal des Sensorsignals 17 des Verschleißsensors 12. Unter dem Begriff "Sensor-Ansprechsignal" ist der Signalwert U des Sensorsignals 17 des Verschleißsensors 12 einschließlich des zeitlichen Verhaltens des Signalwertes U zu verstehen. Dies wird im Weiteren erläutert.

Dabei ist für die oben genannten drei Fälle wie folgt zu unterscheiden.

Im ersten Fall, in dem bei Erreichen des Reibepunkts R₀ mit dem Bremsdruck p₀ beim Hebelweg h₀ keine Nachstellung erfolgt, weil das aktuelle Lüftspiel dem nominellen Lüftspiel entspricht, besteht das Wertepaar p/u aus dem Bremsdruck p₀ und dem zuvor konstanten Signalwert U₀ des Verschleißsensors 12. Das Sensor-Ansprechsignal ist in diesem Fall der konstante Signalwert U₀.

Im zweiten Fall ist Verschleiß vorhanden, der aktuelle Reibepunkt R₁ mit dem dazugehörigen Bremsdruck p₁ wird erst nach dem Überbrücken des nominellen Lüftspiels nach Durchlaufen des Bremsdrucks p₀ ohne Durchlaufen des Bremsabschnitts 16a und ohne starken Anstieg des Bremsdrucks p erreicht.

Hierbei erfolgt aber eine Nachstellung, die beim Bremsdrucks p₀ mit dem Hebelweg h₀ beginnt und eine Veränderung des Signalwertes U des Sensorsignals 17 des Verschleißsensors 12 zur Folge hat. In diesem Fall ist diese Veränderung des Signalwertes U des Sensorsignals 17 das Sensor-Ansprechsignal. Das zugeordnete Wertepaar p/u weist hier den Bremsdruck p₁ und den Sensor-Ansprechwert U>Uo auf.

Im dritten Fall mit dem Bremsdruck p₂ im Reibepunkt R₂ beim Hebelweg h₂ ist das nominale Lüftspiel (beim Bremsdruck p₀ im Reibepunkt R₀ beim Hebelweg h₀) unterschritten, wobei der Bremsdruck p₂ demzufolge bei Beginn der Veränderung des Signalwertes U₀ des Sensorsignals 17 des Verschleißsensors 12 kleiner als der nominale Bremsdruck p₀ (Anlegedruck) ist. Das zugeordnete Wertepaar p/u weist hier den Bremsdruck p₂ und den Sensor-Ansprechwert U<Uo auf.

Durch Vergleich dieser Werte kann festgestellt werden, ob das Sensor-Ansprechsignal des Signalwertes U des Sensorsignals 17 des Verschleißsensors 12 vor, bei, oder nach dem Erreichen des entsprechenden nominalen Bremsdrucks p₀ als Anlegedruck erscheint.

Diese Differenz zwischen dem nominalen Bremsdruck p₀ (Anlegedruck) und dem aktuellen Bremsdruck p beim Auftreten des Sensor-Ansprechsignals vor dem Erreichen des nominalen Bremsdrucks p₀ kann als Auslöser für das Setzen eines Warnsignals oder einer anderen Maßnahme zugrunde gelegt werden.

Eine solche Überwachung des Lüftspiels wird mit der Lüftspielüberwachungsvorrichtung 20 vorgenommen. Dazu zeigt Fig. 7 ein schematisches Blockschaltbild der Lüftspielüberwachungsvorrichtung 20.

An einem Fahrzeug ist die Lüftspielüberwachungsvorrichtung 20 für jede Radbremse vorgesehen, z.B. bei einem dreiachsigen Nutzfahrzeug für sechs Radbremsen.

Die Lüftspielüberwachungsvorrichtung 20 umfasst in diesem Beispiel die Steuereinrichtung 20a, den Verschleißsensor 12 und eine Meldeeinheit 26. Außerdem ist ihr in diesem Ausführungsbeispiel das Bremssteuergerät 19 zugeordnet, mit dem die Steuereinrichtung 20a verbunden ist. Anstelle des Bremssteuergerätes 19 oder zusätzlich zu diesem können natürlich auch entsprechende Sensoren an der Steuereinrichtung 20a angeschlossen sein. Diese Sensoren können z.B. ein Bremspedalsensor zur Erfassung einer Bremsung, ein Druck- oder/und Kraftsensor zur Erfassung der Zuspannkraft bzw. des Bremsdrucks p, ein Hebelwegsensor oder Bremszylinderkolbenwegsensor zur Erfassung des Hebelwegs h sein. Außerdem ist die Kennlinie des Bremszylinders oder/und der Scheibenbremse 1 als Druck-Weg-Kennlinie, wie z.B. die Kennlinie 16 in Fig. 5, in dem Bremssteuergerät 19 oder in einer speziellen Speichereinrichtung, z.B. in der Steuereinrichtung 20a abgelegt.

Für eine Erfassung zusätzlicher Größen ist erfindungsgemäsß eine Temperaturerfassung 27 dargestellt, die eventuell zur Auswertung von Messwerten und abgeleiteten Größen von der Steuereinrichtung 20a herangezogen werden. Dies kann z.B. ein Temperatursensor an jeder Radbremse eines zugeordneten Fahrzeugs sein, der mit der Steuereinrichtung 20a entsprechend verbunden ist.

Die Verbindungen mit der Steuereinrichtung 20a können elektrische oder optische Übertragungsstrecken sein, natürlich sind auch drahtlose Verbindungen möglich, beispielsweise von jeder Radbremse eines Fahrzeugs zu einer zentralen Meldeeinheit 26.

Die Steuereinrichtung 20a umfasst in diesem Beispiel eine Speichereinheit 21, eine Erkennungseinheit 22, eine Vergleichseinheit 23, eine Auswerteeinheit 24 und eine Ausgabeeinheit 25.

Die Speichereinheit 21 dient zur Speicherung u.a. vorher festlegbarer Werte, z.B. Tabellenwerte und/oder Kennlinien des jeweiligen Bremszylinders und Verschleißsensors 12. Die Druck-Weg-Kennlinie des jeweiligen Bremszylinders kann aber auch in die Speichereinheit 21 durch ein so genanntes selbständiges Lernen eingeschrieben werden. Das kann z.B. bei Neuzustand der Scheibenbremse 1 erfolgen. Gleiches gilt auch für die Kennlinien der Verschleißsensoren 12. Natürlich können auch weitere Werte als Referenzen, Grenzwerte, usw. in der Speichereinheit 21 abgelegt werden. Die Speichereinheit 21 ist mit der Vergleichseinheit 23 verbunden.

Die Speichereinheit 21 dient auch zur Speicherung der vom Verschleißsensor 12 erfassten Signalwerte, entweder durch eine (nicht gezeigte) direkte Verbindung mit diesem oder z.B. über das Bremssteuergerät 19.

Die Erkennungseinheit 22 ist mit dem Verschleißsensor 12 verbunden. Sie erfasst den aktuellen Signalwert U des Sensorsignals 17 des Verschleißsensors 12. Außerdem ist die Erkennungseinheit 22 an die Vergleichseinheit 23 angeschlossen und stellt der Vergleichseinheit 23 den erfassten Signalwert U in einer entsprechenden Form, z.B. als Digitalsignal, zur Verfügung.

Die Vergleichseinheit 23 bildet mit aktuellen Bremsdruckwerten p aus dem Bremssteuergerät 19 bzw. von anderen, nicht gezeigten Sensoren und mit den von der Erkennungseinheit 22 gelieferten aktuellen Signalwerten U aktuelle Wertepaare p/U. Diese vergleicht die Vergleichseinheit 23 mit den Tabellenwerten bzw. Kennlinienwerten aus der Speichereinheit 21 oder/und aus dem Bremssteuergerät 19. Die Vergleichseinheit 23 liefert ihre Vergleichsergebnisse an die Auswerteeinheit 24, mit der sie verbunden ist.

Die Auswerteeinheit 24 wertet die von der Vergleichseinheit 23 erhaltenen Ergebnisse aus, wobei sie auch auf die Speichereinheit 21 zurückgreift (was nicht dargestellt ist). In Abhängigkeit von der Auswertung aktiviert die Auswerteeinheit 24 die mit ihr verbundene Ausgabeeinheit 25, indem sie ihr Werte, Warnungen, Informationen mit entsprechenden Hinweisen zur Ausgabe übergibt. Außerdem steht die Auswerteeinheit 24 mit einer weiteren Speichereinheit 21a in Verbindung, in welcher z.B. der aktuelle Signalwert U temporär oder für weitere Verwendung gespeichert werden kann. Natürlich können auch andere Werte in der Speichereinheit 21a abgelegt werden oder/und gespeichert sein.

Die Ausgabeeinheit 25 bereitet die von der Auswerteeinheit 24 erhaltenen Informationen zur Anzeige bzw. Meldung auf und überträgt diese in geeigneter Form an die Meldeeinheit 26.

Bei einem Bremsvorgang, der über das Bremssteuergerät 19 oder z.B. durch einen Bremspedalsensor von der Lüftspielüberwachungsvorrichtung 20 erkannt wird, wird die Lüftspielüberwachungsvorrichtung 20 aktiviert.

Die von der Vergleichseinheit 23 gebildeten aktuellen Wertepaare p/U werden mit den in der Speichereinheit 21 gespeicherten Wertepaaren verglichen. Bei einem Ansteigen des Bremsdrucks p wird überwacht, ob bis zum Erreichen des nominellen Bremsdrucks p₀ eine Veränderung des konstanten Signalwertes U des Verschleißsensors 12 auftritt. Wenn dies der Fall ist (U>Uo), erfolgt durch die Auswerteeinheit 24 eine Warnung an die Ausgabeeinheit 25 zur akustischen, optischen, haptischen oder/und alphanumerischen Meldung durch die Meldeeinheit 26, dass das nominelle Lüftspiel unterschritten ist.

Wenn der nominelle Bremsdruck p0 erreicht ist, kein Sensor-Ansprechsignal registriert wird und der Bremsdruck p gemäß dem Bremsabschnitt 16a (in der Speichereinheit 21 gespeichert) stark ansteigt, wird davon ausgegangen, dass kein Nachstellen erfolgt und das Lüftspiel korrekt ist.

Wenn der nominelle Bremsdruck p0 erreicht ist, ein Sensor-Ansprechsignal registriert wird und der Bremsdruck p nicht stark ansteigt, sondern die gespeicherte Kennlinie 16 weiter durchläuft, wird durch die Auswerteinheit 24 der Meldeeinheit 25 mitgeteilt, dass eine Nachstellung erfolgt. Dabei kann auch eine Bewertung der Nachstellung derart ausgeführt werden, dass die Nachstellung gering, normal oder groß ist.

Die Überwachung des Lüftspiels in der folgenden Tabelle zusammengefasst.

**Tabelle 1 Fallunterscheidung**

| **Wertepaar p/U** | **Lüftspiel** | **Meldung** |
|---|---|---|
| p=p₀ und U=U₀ | Korrekt | Lüftspiel korrekt |
| p>p₀ und U>U₀ | Zu groß | Nachstellung |
| p<p₀ und U<U₀ | Unterschritten | Warnung |

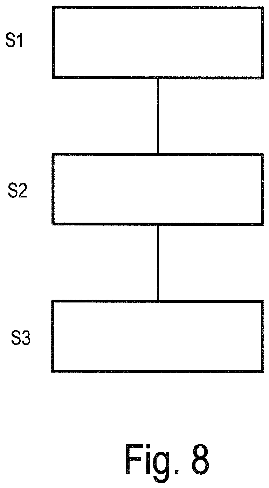

Fig. 8 zeigt ein Flussdiagramm eines Ausführungsbeispiels eines erfindungsgemäßen Verfahrens zur Lüftspielüberwachung mit der oben beschriebenen Lüftspielüberwachungsvorrichtung.

Dabei werden in einem ersten Verfahrensschritt S1 die aktuellen Wertepaare p/U während eines Bremsvorgangs gebildet, wobei eine Erfassung der Signalwerte U erfolgt.

In einem zweiten Verfahrensschritt S2 werden die aktuellen Wertepaare p/U mit den in der Speichereinheit 21 gespeicherten Wertepaaren verglichen.

Und anhand dieser Vergleiche erfolgt in einem dritten Verfahrensschritt S3 eine Auswertung mit möglicher Meldung.

Bei bestimmten Betriebszuständen der Scheibenbremse 1 kann es zweckmäßig sein, ein zu frühes oder unnötiges Warnsignal zu vermeiden. Wenn z.B. das Lüftspiel durch thermische Einflüsse nur vorübergehend verringert ist (p<p₀ und U<Uo) und sich nach Abkühlung wieder normalisiert, ist ein Warnung nicht notwendig. Dazu ist die Steuereinrichtung 20a mit einer Temperaturerfassung 27 2. verbunden. Die Temperaturerfassung 27 kann z.B. ein separater Temperatursensor an der Scheibenbremse 1 sein oder ein Temperaturwert, den das Bremssteuergerät 19 liefert.

Entsprechend der Charakteristika von Scheibenbremse 1 und Reibpartnern können verschiedene Strategien bei der Auswertung der Daten (Wertepaare p/U; Temperatur) mittels der Auswerteeinheit 24 entwickelt werden. So kann z.B. das Ausgeben einer Warnung bzw. eines Warnsignals beispielsweise erst nach einer bestimmten Anzahl von Messwerten bzw. Überwachungen (aktuelle Wertepaare p/U) außerhalb der Toleranz festgelegt werden. Auch ein bestimmter Trend der Messwerte in den aktuellen Wertepaaren p/U kann für eine Meldung (positiv, negativ oder neutral) zugrunde gelegt werden.

Während das Erfassen und Auswerten der Wertepaare p/U zu jedem beliebigen Betriebszeitpunkt der Scheibenbremse 1 durch die Lüftspielüberwachungsvorrichtung 20 erfolgen kann, sind natürlich verschiedene Vorgehensweisen möglich. Sowohl der Zeitpunkt als auch die Häufigkeit der Lüftspielüberwachung können in Abhängigkeit vom Fahrzeugtyp bzw. -einsatz festgelegt werden. So kann z.B. die Lüftspielüberwachung im Stillstand des Fahrzeugs (durch Einleiten einer automatischen Zuspannung der Bremse oder durch die Meldeeinheit mit einer Aufforderung an den Fahrer) oder während der Fahrt ausgeführt werden. Eine Lüftspielüberwachung kann auch erst nach einer bestimmten Anzahl von Bremsungen oder kontinuierlich erfolgen.

Die oben beschriebene Zuordnung (Wertepaare p/U) Bremsdruck (Anlegedruck) p und Sensor-Ansprechsignal als Signalwert U des Verschleißsensors 12 kann aus der Druck-Weg-Kennlinie des verwendeten Bremszylinders und den bekannten geometrischen Werten der Scheibenbremse 1 abgeleitet werden. Für die genauere und spezifische Erfassung der entsprechenden Daten einer Fahrzeugbremse (Bremssattel 4 mit Bremszylinder) ist es möglich, z.B. im Neuzustand der Scheibenbremse 1 den Ansprechdruck in das System bzw. die Lüftspielüberwachungsvorrichtung 20 einzulernen. Dabei wird bei kontrolliertem Druckanstieg des Bremsdrucks p im Bremszylinder der Signalwert U des Verschleißsensors 12 überwacht und der Druck p im Ansprechmoment bzw. die gesamte Kennlinie gespeichert.

Weitere Kenngrößen der Scheibenbremse 1, deren Berücksichtigung für die Messgenauigkeit zur Lüftspielüberwachung vorteilhaft ist, werden erfindungsgemäß ebenfalls eingelernt und in die Auswertung der Messwerte einbezogen. Da der Verschleißsensor 12 üblicherweise über mechanische Übertragungselemente (Zahnräder, Kette o.ä.) bewegt wird, beeinflussen mechanische Spiel die synchrone Bewegung von Bremshebel 8 und Verschleißsensor 12 und damit das Sensorsignal 17. Das Summenspiel dieser mechanischen Spiele zwischen Abtriebsfinger 8a des Bremshebels 8 und Verschleißsensor 12 bewirkt eine Hysterese im Spannungsverlauf der Kurve des Sensorsignals 17 bei Zustellung (Bremshub) und Lösen (Rückhub). Diese Hysterese kann durch Messung der Signalwerte U des Sensorsignals 17 bei Be- und Entlüftung des Bremszylinders gemessen, in der Speichereinheit 21 gespeichert und zur Korrektur der Messergebnisse verwendet werden.

Die Lüftspielüberwachungsvorrichtung 20 ist beispielhaft für eine bestimmte Bauart von Scheibenbremsen 1 beschrieben.

Die Erfindung ist nicht auf die oben beschriebenen Ausführungsbeispiele beschränkt. Sie ist im Rahmen der beigefügten Ansprüche modifizierbar.

So ist die Lüftspielüberwachungsvorrichtung 20 auch für andere Bauformen von Nachstelleinrichtung 10, Antrieb 9 und elektronischer Verschleißsensierung anwendbar, da die funktionalen Grundlagen auch dabei gelten.

Auch die Anwendung bei Trommelbremsen ist möglich, da diese teilweise auch mit elektronischer Verschleißerfassung und Steuerung mit einer Bremssteuerung (EBS) ausgerüstet sind und bezüglich des Nachstellprinzips den gleichen Gesetzmäßigkeiten gehorchen.

Es ist denkbar, dass an einem Fahrzeug die für jede Radbremse vorgesehene Lüftspielüberwachungsvorrichtung 20 an einem zentralen Ort am Fahrzeug angeordnet ist, z.B. bei oder in dem gemeinsamen Bremssteuergerät 19. Die Lüftspielüberwachungsvorrichtungen 20 können dabei auch Bestandteil einer Software des Bremssteuergerätes 19 sein.

### Bezugszeichenliste

- 1: Scheibenbremse
- 2: Bremsscheibe
- 2a: Bremsscheibenachse
- 3: Bremsbelag
- 3a: Bremsbelagträger
- 4: Bremssattel
- 5, 5': Spindeleinheit
- 5a: Nachstellerachse
- 5'a: Mitnehmerachse
- 5b: Nachstellerwelle
- 5'b: Mitnehmerwelle
- 6, 6': Gewindespindel
- 6a, 6'a: Druckstück
- 7: Traverse
- 7a: Rückstellfeder
- 8: Bremshebel
- 8a: Abtriebsfinger
- 8b: Arm
- 8c: Krafteinleitungsabschnitt
- 8d: Hebelkörper
- 8e: Bremshebelachse
- 9: Antrieb
- 10: Nachstelleinrichtung
- 10a: Antriebselement
- 10b: Schaltgabelfinger
- 11: Synchroneinrichtung
- 11a, 11'a: Synchronrad
- 11b: Synchronmittel
- 12: Verschleißsensor
- 13: Steckverbinder
- 13a: Anschlussleitung
- 14: Leerweg
- 15: Lücke
- 15a, 15b: Schaltgabelwand
- 16: Kurve
- 16a-c: Bremsabschnitt
- 17: Sensorsignal
- 17a, 17'a: Nachstellsignalabschnitt
- 17b, 17'b: Konstantsignalabschnitt
- 18: Sensorkennlinie
- 19: Bremssteuergerät
- 20: Lüftspielüberwachungsvorrichtung
- 20a: Steuereinrichtung
- 21, 21a: Speichereinheit
- 22: Erkennungseinheit
- 23: Vergleichseinheit
- 24: Auswerteeinheit
- 25: Ausgabeeinheit
- 26: Meldeeinheit
- 27: Temperaturerfassung
- GV, GVa: Gesamtverschleiß
- h, h₀, h₁, h₂: Hebelweg
- hl: Lösen
- hz: Zuspannen
- nl, nz: Verschwenkung
- p, p₀, p₁, p₂: Bremsdruck
- R₀, R₁, R₂: Reibepunkt
- µS1-S3: Verfahrensschritt
- U, U₀, U₁, Uₐ-U_{c}: Signalwert

## Patentansprüche

1. Scheibenbremse (1), insbesondere für ein Kraftfahrzeug, mit einer Zuspannvorrichtung, insbesondere mit einem Bremshebel (8), einer Nachstelleinrichtung (10), die mit der Zuspannvorrichtung, insbesondere mit dem Bremshebel (8), zur Nachstellung eines Verschleißes von Bremsbelägen (3) und Bremsscheibe (2) gekoppelt ist, einem Verschleißsensor (12) zur Erfassung eines Verschleißwertes von Bremsbelägen (3) und Bremsscheibe (2), und einem Bremssteuergerät (19),
wobei die Scheibenbremse (1) eine Lüftspielüberwachungsvorrichtung (20) mit einer Steuereinrichtung (20a) aufweist, welche mit dem Verschleißsensor (12) und dem Bremssteuergerät (19) in Verbindung steht,
**dadurch gekennzeichnet, dass** die Lüftspielüberwachungsvorrichtung (20) für eine Einbeziehung von Nebenbedingungen und Abschätzung von Trends und erfassten Messwerten weiterhin mindestens eine Temperaturerfassung (27) aufweist, und dass die Lüftspielüberwachungsvorrichtung (20) für ein Einlernen weiterer Kenngrößen der Scheibenbremse (1) ausgebildet ist.

2. Scheibenbremse (1) nach Anspruch 1, **dadurch gekennzeichnet, dass** die Steuereinrichtung (20a) der Lüftspielüberwachungsvorrichtung (20) zur Erfassung eines aktuetten Signatwertes (U) des Verschleißsensors (12) mit einer Erkennungseinheit (22) ausgebildet ist.

3. Scheibenbremse (1) nach Anspruch 2, **dadurch gekennzeichnet, dass** die Erkennungseinheit (22) zur Erfassung einer zeitlichen Veränderung des aktuellen Signalwertes (U) des Verschleißsensors (12) ausgebildet ist.

4. Scheibenbremse (1) nach Anspruch 2 oder 3, **dadurch gekennzeichnet, dass** die Steuereinrichtung (20a) der Lüftspielüberwachungsvorrichtung (20) zur Bildung von aktuellen Wertepaaren (p/U) aus aktuellen Bremsdruckwerten (p) und erfassten aktuellen Signalwerten (U) des Verschleißsensors (12) und zum Vergleich der aktuellen Wertepaare (p/U) mit gespeicherten Referenzwerten mit einer Vergleichseinheit (23) versehen ist.

5. Scheibenbremse (1) nach Anspruch 4, **dadurch gekennzeichnet, dass** die aktuellen Bremsdruckwerte (p) aus dem Bremssteuergerät (19) stammen oder/und Ausgangswerte mindestens eines anderen Sensors sind.

6. Scheibenbremse (1) nach Anspruch 4 oder 5, **dadurch gekennzeichnet, dass** die gespeicherten Referenzwerte in dem Bremssteuergerät (19) gespeichert sind.

7. Scheibenbremse (1) nach einem der Ansprüche 4 bis 6, **dadurch gekennzeichnet, dass** die gespeicherten Referenzwerte in einer Speichereinheit (21a) der Steuereinrichtung (20a) gespeichert sind.

8. Scheibenbremse (1) nach einem der Ansprüche 4 bis 7, **dadurch gekennzeichnet, dass** die Steuereinrichtung (20a) der Lüftspielüberwachungsvorrichtung (20) eine Auswerteeinheit (24) zur Auswertung der Ergebnisse der Vergleichseinheit (23) aufweist.

9. Scheibenbremse (1) nach Anspruch 8, **dadurch gekennzeichnet, dass** die Lüftspielüberwachungsvorrichtung (20) weiterhin eine Meldeeinheit (26) umfasst, welche anhand der Auswertung der Auswerteeinheit (24) Meldungen zum Stand der Lüftspielüberwachung akustisch, visuell, haptisch oder/und alphanumerisch meldet.

10. Scheibenbremse (1)nach einem der vorhergehenden Ansprüche, **dadurch gekennzeichnet, dass** die Steuereinrichtung (20a) der Lüftspielüberwachungsvorrichtung (20) Bestandteil des Bremssteuergerätes (19) ist.

11. Verfahren zum Überwachen eines Lüftspiels einer Scheibenbremse (1) nach einem der vorhergehenden Ansprüche,
**gekennzeichnet durch** die Verfahrensschritte
(S1) Bilden von aktuellen Wertepaaren (p/U) aus aktuellen Bremsdruckwerten (p) und erfassten aktuellen Signalwerten (U) des Verschleißsensors (12) während eines Bremsvorgangs;
(S2) Vergleichen der gebildeten aktuellen Wertepaare (p/U) mit vorher gespeicherten Referenzwerten; und
(S3) Auswerten des Vergleichens und Ausgeben von Meldungen zum Überwachen des Lüftspiels, wobei
thermische Einflüsse mittels einer Temperaturerfassung (27) miteinbezogen werden, und wobei
weitere Kenngrößen der Scheibenbremse (1) eingelernt und miteinbezogen werden.

12. Verfahren nach Anspruch 11, **dadurch gekennzeichnet, dass** im Verfahrensschritt (S1) Bilden von aktuellen Wertepaaren (p/U) die aktuellen Bremsdruckwerte (p) von dem Bremssteuergerät (19) oder/und einem zusätzlichen Sensor geliefert werden.

13. Verfahren nach Anspruch 11 oder 12, **dadurch gekennzeichnet, dass** im Verfahrensschritt (S3) Auswerten ein vorher festlegbares, nominelles Lüftspiel ohne Nachstellung festgestellt wird, wenn ein aktuelles Wertepaar (p/U) einem gespeicherten Wertepaar (p₀/U₀), das einem korrekten Lüftspiel zugeordnet ist, entspricht, und das darauf folgende Wertepaar (p/U) keine Veränderung des erfassten aktuellen Signalwertes (U) des Verschleißsensors (12), jedoch einen starken Anstieg des Bremsdrucks (p) aufweist.

14. Verfahren nach einem der Ansprüche 11 bis 13, **dadurch gekennzeichnet, dass** im Verfahrensschritt (S3) Auswerten ein vorher festlegbares, nominelles und aufgrund von Verschleiß vergrößertes Lüftspiel mit Nachstellung festgestellt wird, wenn ein aktuelles Wertepaar (p/U) einem gespeicherten Wertepaar (p₀/U₀), das einem korrekten Lüftspiel zugeordnet ist, entspricht, und das darauf folgende Wertepaar (p/U) eine Veränderung des erfassten aktuellen Signalwertes (U) des Verschleißsensors (12), jedoch keinen starken Anstieg des Bremsdrucks (p) aufweist.

15. Verfahren nach einem der Ansprüche 11 bis 14, **dadurch gekennzeichnet, dass** im Verfahrensschritt (S3) Auswerten ein vorher festlegbares, nominelles Lüftspiel als unterschritten festgestellt wird, wenn der Bremsdruck (p₂) eines aktuellen Wertepaars (p/U) kleiner als der Bremsdruck (p₀) ist, der einem vorher festlegbaren, korrekten Lüftspiel zugeordnet ist, und das darauf folgende Wertepaar (p/U) keine Veränderung des erfassten aktuellen Signalwertes (U) des Verschleißsensors (12), jedoch einen starken Anstieg des Bremsdrucks (p) oder eine Veränderung des erfassten aktuellen Signalwertes (U) des Verschleißsensors (12), jedoch keinen starken Anstieg des Bremsdrucks (p) aufweist.

16. Verfahren nach einem der Ansprüche 11 bis 15, **dadurch gekennzeichnet, dass** im Verfahrensschritt (S3) Auswerten ein Ausgeben einer Warnung bzw. eines Warnsignals erst nach einer bestimmten Anzahl von Bremsungen erfolgt.

17. Verfahren nach einem der Ansprüche 11 bis 16, **dadurch gekennzeichnet, dass** die Referenzwerte durch Einlernen in das Bremsteuergerät (19) oder/und die Speichereinheit (21) vorher gespeichert werden.

18. Verfahren nach einem der Ansprüche 11 bis 17, **dadurch gekennzeichnet, dass** ein Reibepunkt (R₀, R₁, R₂) festgestellt wird, indem die aktuellen Wertepaare (p/U) mit gespeicherten Wertepaaren verglichen werden, wenn ein aktuelles Wertepaar (p/U) der aktuellen Wertepaare (p/U), die mit gespeicherten Wertepaaren verglichen werden, einen starken Anstieg des Bremsdrucks (p) aufweist.

## Claims

1. Disc brake (1), in particular for a motor vehicle, with an application device, in particular having a brake lever (8), an adjustment device (10) coupled to the application device, in particular to the brake lever (8), for adjusting the wear of brake pads (3) and a brake disc (2), a wear sensor (12) for detecting a wear value of bake pads (3) and the brake disc (2), and a brake control unit (19),
wherein the disc brake (1) has a clearance monitoring device (20) with a control device (20a) which is connected to the wear sensor (12) and the brake control unit (19),
**characterised in that** the clearance monitoring device (20) also comprises at least one temperature detection device (27) for taking into account associated conditions and for estimating trends and detected measured values, and the clearance monitoring device (20) is designed for the acquisition of further characteristics of the disc brake (1) by teach-in means.

2. Disc brake (1) according to Claim 1, **characterised in that** the control device (20a) of the clearance monitoring device (20) is designed to detect a current signal value (U) from the wear sensor (12) with a recognition unit (22).

3. Disc brake (1) according to Claim 2, **characterised in that** the recognition unit (22) is designed to detect a time variation of the current signal value (U) from the wear sensor (12).

4. Disc brake (1) according to Claims 2 or 3, **characterised in that** the control device (20a) of the clearance monitoring device (20) is designed to form current value pairs (p/U) from current brake pressure values (p) and detected current signal values (U) from the wear sensor (12), and to compare the said current value pairs (p/U) with stored reference values by means of a comparator unit (23).

5. Disc brake (1) according to Claim 4, **characterised in that** the current brake pressure values (p) are obtained from the brake control unit (19) and/or are output values from at least one other sensor.

6. Disc brake (1) according to Claims 4 or 5, **characterised in that** the stored reference values are stored in the brake control unit (19).

7. Disc brake (1) according to any of Claims 4 to 6, **characterised in that** the stored reference values are stored in a memory unit (21a) of the control device (20a).

8. Disc brake (1) according to any of Claims 4 to 7, **characterised in that** the control device (20a) of the clearance monitoring device (20) comprises an evaluation unit (24) for evaluating the results from the comparator unit (23).

9. Disc brake (1) according to Claim 8, **characterised in that** the clearance monitoring device (20) also comprises a signalling unit (26) which, with reference to the evaluation by the evaluation unit (24), sends out acoustic, visual, haptic and/or alphanumerical messages about the condition of the clearance monitoring.

10. Disc brake (1) according to any of the preceding claims, **characterised in that** the control device (20a) of the clearance monitoring device (20) is part of the brake control unit (19).

11. Method for monitoring a clearance of a disc brake (1) according to any of the preceding claims,
**characterised by** the process steps:
(S1) formation of current value pairs (p/U) from current brake pressure values (p) and detected current signal values (U) from the wear sensor (12) during a braking process;
(S2) comparison of the current value pairs (p/U) formed with previously stored reference values; and
(S3) evaluation of the comparison and output of messages for monitoring the clearance, wherein
thermal influences from a temperature detection device (27) are taken into account, and wherein
further characteristic parameters of the disc brake (1) obtained by teach-in means are taken into account.

12. Method according to Claim 11, **characterised in that** in the process step (S1) of forming current value pairs (p/U), the current brake pressure values(p) are supplied by the brake control unit (19) and/or by an additional sensor.

13. Method according to Claims 11 or 12, **characterised in that** in the process step (S3) of evaluation, a previously definable nominal clearance without adjustment is determined if a current value pair (p/U) corresponds to a stored value pair (p₀/U₀) that is associated with a correct clearance, and the next value pair (p/U) shows a change of the current signal value (U) from the wear sensor (12) but a marked increase of the brake pressure (p).

14. Method according to any of Claims 11 to 13, **characterised in that** in the process step (S3) of evaluation a previously definable nominal clearance increased due to wear, with adjustment, is determined if a current value pair (p/U) corresponds to a stored value pair (po/Uo) associated with a correct clearance, and the next value pair (p/U) shows a change of the current signal value (U) from the wear sensor (12) but no marked increase of the brake pressure (p).

15. Method according to any of Claims 11 to 14, **characterised in that** in the process step (S3) of evaluation a previously definable nominal clearance is detected to have been undershot, if the brake pressure (p₂) of a current value pair (p/U) is lower than the brake pressure (p₀) which is associated with a previously definable correct clearance, and the next value pair (p/U) shows no change of the current signal value (U) from the wear sensor (12) detected, but shows a marked increase of the brake pressure (p) or a change of the current signal value (U) detected from the wear sensor (12) but no marked increase of the brake pressure (p).

16. Method according to any of Claims 11 to 15, **characterised in that** in the process step (S3) of evaluation a warning or warning signal is only emitted after a certain number of braking operations.

17. Method according to any of Claims 11 to 16, **characterised in that** the reference values are stored in advance in the brake control unit (19) and/or the memory unit (21) by virtue of a teach-in process.

18. Method according to any of Claims 11 to 17, **characterised in that** a friction point (R₀, R₁, R₂) is determined, **in that** the current value pair (p/U) is compared with stored value pairs, if a current value pair (p/U) of the current value pairs (p/U) which is compared with stored value pairs shows a marked increase of the brake pressure (p).

## Revendications

1. Frein (1) à disque, notamment pour un véhicule automobile, comprenant un système de serrage, ayant notamment un levier (8) de frein, un dispositif (10) de rattrapage, qui est couplé au système de serrage, notamment au levier (8) de frein, pour le rattrapage de l'usure de garnitures (3) de frein et de disque (2) de frein, un capteur (12) d'usure pour le relevé d'une valeur d'usure de garnitures (3) de frein et de disque (2) de frein et un appareil (19) de commande de frein,
dans lequel le frein (1) à disque a un système (20) de contrôle du jeu des garnitures, ayant un dispositif (20a) de commande, qui est en liaison avec le capteur (12) d'usure et avec l'appareil (19) de commande de frein, **caractérisé en ce que** le système de contrôle du jeu des garnitures a, pour l'inclusion de conditions secondaires et l'évacuation de tendances et de valeurs de mesure relevées, en outre, au moins un relevé (27) de température et **en ce que** le système (20) de contrôle du jeu des garnitures est constitué pour un apprentissage d'autres grandeurs caractéristiques du frein (1) à disque.

2. Frein (1) à disque suivant la revendication 1, **caractérisé en ce que** le dispositif (20a) de commande du système (20) de contrôle du jeu des garnitures est constitué pour relever une valeur (U) en cours de signal du capteur (12) d'usure par une unité (22) de détection.

3. Frein (1) à disque suivant la revendication 2, **caractérisé en ce que** l'unité (22) de détection est constituée pour relever une variation en fonction du temps de la valeur (U) en cours du signal du capteur (12) d'usure.

4. Frein (1) à disque suivant la revendication 2 ou 3, **caractérisé en ce que** le dispositif (20a) de commande du système (20) de contrôle du jeu des garnitures est pourvu d'une unité (23) de comparaison pour la formation de paires (p/U) de valeurs en cours à partir de valeurs (p) en cours de pression de frein et de valeurs (U) de signal en cours relevées du capteur (12) d'usure et pour la comparaison des paires (p/U) de valeurs en cours à des valeurs de référence mises en mémoire.

5. Frein (1) à disque suivant la revendication 4, **caractérisé en ce que** les valeurs (p) en cours de pression de frein proviennent de l'appareil (19) de commande de frein ou/et sont des valeurs de sortie d'au moins un autre capteur.

6. Frein (1) à disque suivant la revendication 4 ou 5, **caractérisé en ce que** les valeurs de référence mises en mémoire sont mises en mémoire dans l'appareil (19) de commande de frein.

7. Frein (1) à disque suivant l'une des revendications 4 à 6, **caractérisé en ce que** les valeurs de référence mises en mémoire sont mises en mémoire dans une unité (21a) de mémoire du dispositif (20a) de commande.

8. Frein (1) à disque suivant l'une des revendications 4 à 7, **caractérisé en ce que** le dispositif (20a) de commande du système (20) de contrôle du jeu des garnitures a une unité (24) d'exploitation pour l'exploitation des résultats de l'unité (23) de comparaison.

9. Frein (1) à disque suivant la revendication 8, **caractérisé en ce que** le système (20) de contrôle du jeu des garnitures comprend, en outre, une unité (26) d'indication, qui, à l'aide de l'exploitation de l'unité (24) d'exploitation, donne acoustiquement, visuellement, haptiquement ou/et alphanumériquement des messages sur l'état du contrôle du jeu des garnitures.

10. Frein (1) à disque suivant l'une des revendications précédentes, **caractérisé en ce que** le dispositif (20a) de commande du système (20) de contrôle du jeu des garnitures est une partie constitutive de l'appareil (19) de commande de frein.

11. Procédé de contrôle d'un jeu des garnitures d'un frein (1) à disque suivant l'une des revendications précédentes, **caractérisé par** les stades de procédé
(S1) la formation de paires (p/U) de valeurs en cours à partir de valeurs (p) en cours de pression de frein et de valeurs (U) de signal en cours relevées du capteur (12) d'usure pendant un freinage ;
(S2) la comparaison des paires (p/U) de valeurs en cours formées à des valeurs de référence mises en mémoire auparavant ; et
(S3) l'exploitation de la comparaison et l'émission de messages pour le contrôle du jeu des garnitures, dans lequel
on inclut des influences thermiques au moyen d'un relevé (27) de température, et dans lequel on fait l'apprentissage d'autres grandeurs caractéristiques du frein à disque et on les inclut.

12. Procédé suivant la revendication 11, **caractérisé en ce que**, dans le stade (S1) du procédé de formation de paires (p/U) de valeurs en cours, les valeurs (p) en cours de pression de frein sont fournies par l'appareil (19) de commande de frein ou/et par un capteur supplémentaire.

13. Procédé suivant la revendication 11 ou 12, **caractérisé en ce que**, dans le stade (S3) du procédé d'exploitation, on fixe un jeu des garnitures nominal pouvant être fixé à l'avance sans rattrapage, si une paire (p/U) de valeurs en cours correspond à une paire (p₀/U₀) de valeurs mises en mémoire, qui est associée à un jeu correct des garnitures, et si la paire (p/U) de valeurs suivantes ne présente pas de variation de la valeur (U) du signal en cours détecté du capteur (12) d'usure, mais une forte élévation de la pression (p) de frein.

14. Procédé suivant l'une des revendications 11 à 13, **caractérisé en ce que**, dans le stade (S3) du procédé d'exploitation, on fixe, avec rattrapage, un jeu des garnitures nominal pouvant être fixé à l'avance et agrandi en raison de l'usure, si une paire (p/U) de valeurs en cours correspond à une paire (po/Uo) de valeurs mises en mémoire associée à un jeu des garnitures correct et si la paire (p/U) de valeurs suivantes ne présente pas une variation de la valeur (U) du signal en cours relevé du capteur (12) d'usure, mais pas de forte élévation de la pression (p) de frein.

15. Procédé suivant l'une des revendications 11 à 14, **caractérisé en ce que**, dans le stade (S3) du procédé d'exploitation d'un jeu des garnitures nominal pouvant être fixé à l'avance, on fixe comme étant passé en dessous un jeu des garnitures nominal pouvant être fixé à l'avance, si la pression (p₂) de frein d'une paire (p/U) de valeurs en cours est plus petite que la pression (p₀) de frein, qui est associée à un jeu des garnitures correct pouvant être fixé à l'avance, et si la paire (p/U) de valeurs suivantes ne présente pas de variation de la valeur (U) du signal en cours relevé du capteur (12) d'usure, mais une forte élévation de la pression (p) de frein, ou une variation de la valeur (U) du signal en cours relevée du capteur d'usure, mais pas de forte élévation de la pression (p) de frein.

16. Procédé suivant l'une des revendications 11 à 15, **caractérisé en ce que**, dans le stade (S3) du procédé d'exploitation, une émission, un avertissement ou un signal d'alerte n'a lieu qu'après un nombre déterminé de freinages.

17. Procédé suivant l'une des revendications 11 à 16, **caractérisé en ce que** l'on met en mémoire auparavant les valeurs de référence par apprentissage dans l'appareil (19) de commande de frein ou/et dans l'unité (21) de mise en mémoire.

18. Procédé suivant l'une des revendications 11 à 17, **caractérisé en ce que** l'on fixe un point (R₀, R₁, R₂) de friction, en comparant les paires (p/U) de valeurs en cours à des paires de valeurs mises en mémoire, si une paire (p/U) de valeurs en cours, parmi les paires (p/U) de valeurs en cours qui sont comparées à des paires de valeurs mises en mémoire, présente une forte élévation de la pression (p) de frein.
